# EUROPEAN PATENT APPLICATION

(11) **EP 4 506 908 A1**
(43) Date of publication of application: **12.02.2025**
(21) Application number: 24189150.6
(22) Date of filing: 17.07.2024
(51) Int. Cl.: G06V 20/40

(54) **APPARATUS AND METHOD OF VIDEO EDITING**

(30) Priority: 09.08.2023 GB 202312192
(71) Applicant: Sony Interactive Entertainment Inc., Tokyo 108-0075 (JP)
(72) Inventor: BRISLIN, Simon, London, W1F 7LP (GB); RYAN, Nicholas, London, W1F 7LP (GB)
(74) Representative: D Young & Co LLP

(57) **Abstract**

A method of video evaluation for a video comprising successive video frames comprises the steps of generating optical flow vectors for at least a subset of corresponding pixels between frame pairs, calculating a difference between corresponding optical flow vectors of successive frame pairs, and evaluating the resulting differences with respect to a predetermined criterion, to identify respective frame pairs for further processing.

## Description

The present application relates to an apparatus and method of video editing.

The playing of video games has become an increasingly social activity, with users wishing to post their experiences to social media, or share their in game story with friends. However, it can be difficult to simultaneously play a video game and selectively record footage to share, particularly for exciting or surprising content when the main focus of the user will be on reacting to the game.

Embodiments of the present application seek to address or mitigate this problem.

### SUMMARY OF THE INVENTION

Various aspects and features of the present invention are defined in the appended claims and within the text of the accompanying description.

In a first aspect, a method of video evaluation is provided in accordance with the claims.

In another aspect, an entertainment device adapted to perform a method of video evaluation is provided in accordance with the claims.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an apparatus in accordance with embodiments of the present description.
- Figure 2 is a flow diagram of a method of video evaluation in accordance with embodiments of the present description.
- Figure 3 is a schematic diagram of image frame region selection in accordance with embodiments of the present description.
- Figure 4 is a schematic diagram of image frame region selection in accordance with embodiments of the present description.
- Figure 5 is a schematic diagram of vector component selection in accordance with embodiments of the present description.
- Figure 6 is a flow diagram of a method of video evaluation in accordance with embodiments of the present description.
- Figures 7A-D are schematic diagrams of a comparison between hashes of successive video frames in accordance with embodiments of the present description.
- Figure 8 is a flow diagram of a method of video evaluation in accordance with embodiments of the present description.

### DESCRIPTION OF THE EMBODIMENTS

An apparatus and method of video editing are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

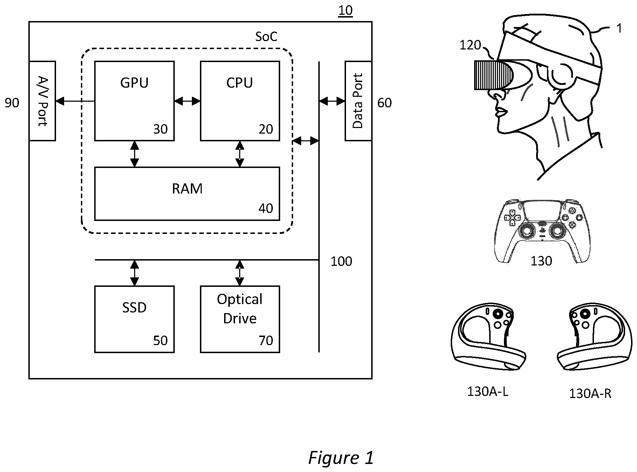

Referring now to the drawings, wherein like reference numerals designate identical or corresponding parts throughout the several views, Figure 1 shows an example apparatus in accordance with embodiments of the present description. As a non-limiting example, the apparatus takes the form of entertainment system 10, such as the Sony^{®} PlayStation 5^{®} (PS5). Other example apparatuses may include other entertainment systems or videogame consoles, personal computers, phones or tablets, or any device capable of simultaneously playing a videogame and recording footage thereof.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

### Video Evaluation - Excitement

In embodiments of the description the apparatus is configured (for example by suitable software instruction) to perform a method for picking out the most exciting moments in a video sequence. Whilst generating highlights for videogame play is a particularly valuable use case, the method is not only game agnostic but can also work on non-game footage and so could be used for extracting exciting moments in other video feeds, such as feeds from security cameras, wildlife monitoring cameras, cameras accumulating image information for machine learning training purposes, and the like; as well as more conventional video content such as TV programmes and movies.

Advantageously, embodiments of the description provide a technique with a particularly low computational cost compared for example to techniques based on machine learning or semantic analysis of image information. Not only are these approaches computationally intensive, but often they require training or tuning to particular types of content.

The method comprises a statistical analysis of a suite of metrics for each image frame.

These comprise two or more selected from the list consisting of:
i. An interframe greyscale delta sum of absolute differences between the current and immediately preceding frame. This captures the overall difference in luminance between frames.
ii. A first interframe colour delta sum of absolute differences for at least a first colour channel between the current and immediately preceding frame;
iii. A second interframe colour delta sum of absolute differences for at least a second colour channel different to the first colour channel between the current and immediately preceding frame;
iv. For the first colour channel, the delta between the mean and current measurements of a property of the first colour channel, the mean being derived over a predetermined period of time; and
v. For the second colour channel the delta between the mean and current measurements of a property of the second colour channel, the mean being derived over a similar predetermined period of time.

For metrics ii.-v., the colour channels can be for example be RGB, but preferably the channels correspond to the LAB colour space, as differences in LAB are more representative of how people perceive changes in an image. Hence in this case the first colour channel would be A (generally a red/green value) and the second colour channel (generally a blue/yellow value) would be B. The greyscale is a suitable representation of the L channel (a lightness value).

Optionally for metrics i.-iii., the delta sum of absolute differences can be between the current frame and a short rolling average of preceding frames (e.g. instead of just the immediately preceding image frame, it could be the an average of the previous two, three, four, or five frames).

For metrics iv. and v. the property being measured for the respective colour channels is typically the mean value of the colour channel over the whole image for the predetermined period of time, but can alternatively or in addition be the standard deviation.

Alternatively, rather than the or each property being over the whole image, the property can be over subsections of the image; for example equal subdivisions of the image such as upper and lower halves of the image, left and right halves of the image, quarters, six, eighth's, 16^{ths}, or 32^{nds} of the image.

Notably, the measurements do not progress down to the per pixel level or even close thereto; typically a subdivision would represent at least 10,000 pixels (32^{ths} of a 1920x1080 image would comprise around 64,000 pixels each), and hence the mean or standard deviation for such a sub-region is based on at least this many pixels over the predetermined period.

One reason for this is that a particular benefit of using high level statistics is that it is possible to efficiently store these statistics for a considerable period of time, enabling an evaluation of visual excitement within a wide context of the content. Hence for example the above-mentioned predetermined period of time may be between one and five minutes, and typically three minutes, for videogame content being generated at a typical frame rate of 60 frames per second. It will be appreciated that 3 minutes times 60 seconds times 60 frames results in approximately 10,000 frames; hence the maintenance of a mean or standard deviation for subdivisions down to around 10,000 pixels would result in no more storage requirement than a single normal video frame, and hence may be efficiently managed by a CPU or GPU of the apparatus. It will also be appreciated that it is possible to generate approximations of rolling averages and standard deviations that do not require the storage of all the data contributing to the sample window, reducing the storage overhead further.

For metrics iv. and v., optionally a bootstrapping process can be used when the generation of edits is on live content, or on content where video frames are not stored for sufficiently long in the buffer to access them after the predetermined period of time, or where there would be insufficient computational bandwidth to appraise past video frames at a higher than current frame rate in order to catch up with current image generation. In these cases, values for preceding instances of the content can be stored (for example when a user stops playing a game on one day and resumes on another, the mean and/or standard deviation values for the last three minutes of play on the previous day can be used to bootstrap the evaluation of gameplay on the later day). Optionally this information can be stored with a specific game save, so that the metrics are faithful to the resumed game state. The information may also be generated, at least to a first approximation, by other users or play testers , and so boot-strap data may be included with the game, or accessible from a server based on a query indicating current progress. Such information may itself be averaged over a number of such other users, or a mean or median user within the plurality of users may be identified for this purpose.

As noted above, two or more of these metrics may be used. Optionally but preferably at least one used metric is based on an interframe short-term measurement (e.g. one of metrics i.-iii.), and one metric is based on a long-term measurement (e.g. one of metrics iv.-v.).

The interframe or short-term measurements are good at detecting in-scene events, whilst the longer term measurements are better at detecting scene changes and so consequently having one of each complements these capabilities.

The selected measurements are converted to z-scores relative to a recent history of these measurements. It will be appreciated that a z-score is a statistical measurement that describes a value's relationship to the mean of a group of values, typically in terms of standard deviations from the mean. Hence the z-score of a measurement (e.g. one of measurements i. to v. above) for a current frame is derived based on a recent history of this measurement (e.g. a mean of historical measurement values).

The historical period for z-scores may be short (for example between 2 and 10 frames), may be of medium duration (for example for frame measurements for the previous 1 to 10 seconds), or may be of long duration (for example for frame measurements for the previous 30 to 300 seconds), or a value in between these rough durations. Similarly the historical period used for deriving Z scores for different measurements may itself be different, with a shorter historical period for measurements i. to iii. than for measurements iv. or v., for example of similar duration to the periods involved in the compilation of the measurements themselves, but alternatively longer than this. It will be appreciated that shorter historical periods lend themselves to the detection of in-scene events, whilst longer historical periods lend themselves to the detection of scene changes.

A weighted sum of the z-scores is then performed to generate a single value for the frame. Generally, the weightings for the z-scores derived from the interframe measurements (measurements i. to iii.) benefit from being higher than the weights for the z-scores derived from the longer term measurements (measurements iv. and v.).

Hence as a non-limiting example, measurements i. to iii. may each have a weighting of 1, whilst measurements iv. and v. may each have a weighting of 0.25.

More generally, z-scores for measurements i. to iii. may each have a weighting in the range 0.3-1, whilst z-scores for measurements iv. and v. may each have a weighting in the range 0.05-0.5, with the optional further restriction that the weighting for the z-scores for measurements i. to iii. are each at least a predetermined interval value higher than the weighting for the z-scores for measurements iv. and v., The predetermined interval value itself being in the range 0.1 to 0.9.

A rolling mean of this weighted sum is then generated. Again the period over which this mean is derived may be of short, medium, or long duration as defined previously. Again it will be appreciated that shorter historical periods lend themselves to the detection of in-scene events, whilst longer historical periods lend themselves to the detection of scene changes.

Then, if the weighted sum for successive frames remains above the rolling mean of that sum for a minimum number of frames then a frame selection window is established. This frame selection window or typically last from when the weighted sum moves above the mean to when it goes back below the mean. The minimum number of frames may again be selected to alter the sensitivity of the system, but it will be appreciated that the minimum number should be significantly shorter than the period of the rolling mean of the weighted sum, and typically less than 50% of the period, preferably less than 10% of the period, and still more preferably less than 1% the period, subject to the practical limitation of the minimum number being at least one, and typically in the order of 2-10 frames.

It will be appreciated that it is therefore necessary to maintain at least this minimum number of image frames in a buffer in order to enable recording of these images into a separate recording memory (or mark them for storage within the buffer) if the weighted sum exceeds the rolling mean for that minimum number of frames.

It will be appreciated that because the system is only based on statistics of preceding frames of the current content (typically a mix of short term and longer term statistics), and selects images as being 'exciting' based on a relative difference in scores for the current frame (or a minimum number thereof) and a rolling history of such scores, then the system automatically calibrates what counts as exciting according to (relative to) the nature of the content being shown. It is therefore able to extract the most exciting elements of any given content, with what counts as being most exciting optionally tunable by adjusting one or more of the following elements:
- the number of preceding frames in measurements i. to iii. (e.g. between 1 and 10) as discussed elsewhere herein;
- the length of the predetermined period in measurements iv. and v. (e.g. between 30 seconds and five minutes) as discussed elsewhere herein;
- the number of preceding respective measurements used to compute the z-scores for selected measurements (e.g. short, medium, or long durations as discussed elsewhere herein);
- the relative weights used to generate a weighted sum of z scores, as discussed elsewhere herein;
- the number of preceding weighted sum z-scores used to generate a rolling average (e.g. short, medium, or long durations as discussed elsewhere herein); and
- the minimum number of frames for which the current weighted sum said score should exceed the rolling average, as discussed elsewhere herein.

Optionally, because the system adapts to the relative excitement of the content, it can become very sensitive if the footage is very calm (which may be the case for example for security camera footage, wildlife monitoring camera footage, or the like), and so it can become very sensitive to small changes (for example litter moving in the breeze).

Consequently optionally the system can additionally check the excitement of selected clips, for example against absolute values, e.g. comparing some or all of measurements i. to v. against absolute values or thresholds, or running alternative excitement measurement schemes against the selected clips. Alternatively or in addition, particularly where the clips do not need to be output immediately, the selected clips can be ranked for excitement (e.g. based on the weighted sum of z-scores for the clip) so that the most exciting clips are ranked higher than the less exciting clips. The clips can optionally still be retained in chronological order, but the ranking can act as a filter that can be used to subsequently exclude selected clips that are relatively less exciting than others.

### Variant Embodiments

In addition to metrics i. to v. above, optionally a sixth metric is audio energy, for example smoothed over a short period such as 0.1 to 1.0 seconds.

Optionally a set of audio metrics, from which one or more may be selected, may be considered in a similar manner to a range of image metrics discussed previously herein. These may include an interframe audio sum for each audio channel, optionally normalised to the mean of all channels for the current frame. Optionally, alternatively or in addition the sum of absolute differences between respective audio channel pairs may be similarly computed, to determine if the audio transitions from balanced to strongly left or right channel or forward or back channel or the like (i.e. to evaluate spatial dynamism, whereas the audio level per channel alone helps evaluate volume dynamism); similarly the audio energy for certain channels such as the subwoofer channel may be evaluated in a similar manner to the interframe greyscale delta sum discussed earlier. Similarly in a manner analogous to the colour channels discussed previously, different frequency bands may likewise be evaluated; for example one or more of a base range (e.g. 15-100 Hz), a vocal range (100-10,000 Hz), and a treble range (10,000- 20,000 Hz). These ranges may vary or overlap based on empirical evaluation.

It will also be appreciated that the content for which clips are desired may be interrupted by other content from time to time; in particular within video games the gameplay footage may be interrupted by non-gameplay footage such as pause menus and system screens, and may include footage that is part of the game but not representative of the more general game progress, such as interactions with inventory menus and skill trees. In addition, some games use cut scenes that will be standard for all users of the game. Optionally the methods herein are suspended during some or all of these outputs so that firstly they are not selected, and secondly they do not adversely alter the statistics characterising the gameplay footage. For example it will be appreciated that after interacting with an inventory menu for one minute, it is likely that any ensuing actual gameplay may be considered exciting unless the inventory menu is excluded from the statistics.

A similar approach may be used for adverts, idents, and credits in conventional TV and film content.

Finally optionally some elements of the image frames may be discounted/ignored for any evaluation of excitement; for example an area of a heads up display that shows the weaponry charging, may be relatively dynamic but is not contributing to gameplay; similarly a logo that appears to indicate that the game is being saved may result in increased delta values, but is not part of the game per se. These elements/regions of the image frames may be excluded using a mask or other indication of area, either provided by the game developer or set by the user. In some applications, a user interface to enable this may be provided; for example in the case of a security camera whose field of view takes in a traffic light, it may be desirable to discount the area occupied by the traffic light as this will regularly change and may do so more than the rest of the scene.

Finally, it will be appreciated that the above techniques may be implemented on a variety of platforms including within a graphics processing unit, Central processing unit, or a combination of the two, and that these may be situated on a server or in the cloud, or on an entertainment device such as the PS5. The technique can be run on live (generated or captured) or pre-recorded content.

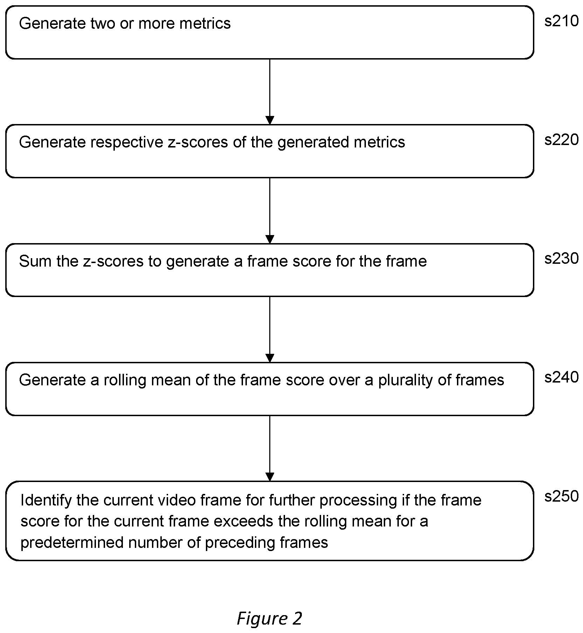

Turning now to Figure 2, in a summary embodiment of the present description, a method of video evaluation comprises the following steps:
- For a current video frame, in a first step s210 generate two or more metrics. As described elsewhere herein, typically these are from the list consisting of:
   i. an interframe greyscale delta sum of absolute differences between the current and immediately preceding frame;
   ii. a first interframe colour delta sum of absolute differences for at least a first colour channel between the current and immediately preceding frame;
   iii. a second interframe colour delta sum of absolute differences for at least a second colour channel different to the first colour channel between the current and immediately preceding frame;
   iv. for a first colour channel of the current video frame, a delta between mean and current measurements of a property of the first colour channel, the mean being derived over a predetermined period of time; and
   v. for a second colour channel of the current video frame, a delta between mean and current measurements of a property of the second colour channel, the mean being derived over a similar predetermined period of time.
- In a second step s220, generate respective z-scores of the generated metrics as described elsewhere herein.
- In a third step s230, sum the z-scores to generate a frame score for the frame as described elsewhere herein.
- In a fourth step s240, generate a rolling mean of the frame score over a plurality of frames as described elsewhere herein.
- And in a fifth step s250, identify (e.g. tag, update metadata, flip a suitable flag in a header or elsewhere, or the like) the current video frame for further processing if the frame score for the current frame exceeds the rolling mean for a predetermined number of preceding frames as described elsewhere herein.

It will be apparent to a person skilled in the art that variations in the above method corresponding to operation of the various embodiments of the apparatus as described and claimed herein are considered within the scope of the present invention, including but not limited to that:
- in an instance of the summary embodiment, the method comprises at least one of metrics i. to iii. and at least one of metrics iv. to v., as described elsewhere herein;
- in an instance of the summary embodiment, the step of summing the z-scores comprises generating a weighted sum, the weighting of any one of metrics i.-iii. exceeding the weighting of any one of metrics iv.-v., as described elsewhere herein;
- in an instance of the summary embodiment, for any one of metrics i.-iii, the delta sum of absolute differences is between the current frame and a rolling average of a predetermined number of preceding frames, as described elsewhere herein;
- in an instance of the summary embodiment, for any one of metrics iv.-v., the property is one or more selected from the list consisting of the mean value of the colour channel, and the standard deviation of the colour channel, as described elsewhere herein;
   - in this case, optionally the or each metric is for two or more subdivisions of the image frame, as described elsewhere herein;
- in an instance of the summary embodiment, for any one of metrics iv.-v., previously recorded mean values are accessed at the start of the video evaluation, as described elsewhere herein;
- in an instance of the summary embodiment, the further processing comprises the steps of establishing a frame selection window, and selecting frames, including the current frame, until the frame score for a further frame non-longer exceeds the rolling mean for a predetermined number of frames, thereby generating or identifying a video clip, as described elsewhere herein;
   - More generally, further processing may comprise one or more of recording, transmission/sharing, encoding, watermarking, combining, post-processing, ranking or scoring on an absolute and/or relative basis, or labelling for classification or training purposes;
- in an instance of the summary embodiment, the method comprises the step of adjusting the sensitivity of identification by adjusting one or more elements selected from the list consisting of the number of preceding frames in measurements i. to iii., the length of the predetermined period in measurements iv. and v., the number of preceding respective measurements used to compute the z-scores for selected measurements, the relative weights used to generate a weighted sum of z scores, the number of preceding weighted sum z-scores used to generate a rolling average, and the minimum number of frames for which the current frame score should exceed the rolling average, as described elsewhere herein;
- in an instance of the summary embodiment, in which a value provided for the identifying step as the rolling mean of the frame score is the larger of a predetermined minimum and the actual rolling mean of the frame score, as described elsewhere herein;
- in an instance of the summary embodiment, the method comprises the steps of evaluating the frame scores of frame sequences identified for further processing, and ranking these frame sequences based on the evaluation, as described elsewhere herein;
- in an instance of the summary embodiment, the method further comprises at least a first metric of audio energy, based upon one or more selected from the list consisting of an audio sum for each audio channel or a frequency range thereof, a sum of absolute differences between respective audio channel pairs or a frequency range thereof, and an interframe delta sum of absolute differences between audio associated with the current and immediately preceding frame for one or more audio channels or a frequency range thereof, as described elsewhere herein;
- in an instance of the summary embodiment, the method comprises the step of suspending the steps of generating metrics and z-scores, summing the z-scores, generating a rolling mean of the frame score, and identifying video frames, whilst a predetermined content type is interrupted (e.g. when gameplay is interrupted by a non-playable element such as a cut-scene, or a non-environment element such as a menu, or a predetermined subset of such interruptions), as described elsewhere herein; and
- in an instance of the summary embodiment, one or more sections of the image in successive frames is consistently discounted for the purpose of generating the or each metric (for example a region encompassing a traffic light in security footage), as described elsewhere herein.

It will be appreciated that the above methods may be carried out by suitably adapting hardware as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in another summary embodiment of the present description, an entertainment device 10 (for example a PlayStation 5 or other console) is adapted (for example by suitable software instruction) to perform a method of video evaluation, comprising:
a video evaluation processor (for example CPU 20 and/or GPU 30) configured to perform (for example by suitable software instruction) the steps of:
for a current video frame, generating two or more metrics from the list consisting of:
   i. an interframe greyscale delta sum of absolute differences between the current and immediately preceding frame;
   ii. a first interframe colour delta sum of absolute differences for at least a first colour channel between the current and immediately preceding frame;
   iii. a second interframe colour delta sum of absolute differences for at least a second colour channel different to the first colour channel between the current and immediately preceding frame;
   iv. for a first colour channel of the current video frame, a delta between mean and current measurements of a property of the first colour channel, the mean being derived over a predetermined period of time; and
   v. for a second colour channel of the current video frame, a delta between mean and current measurements of a property of the second colour channel, the mean being derived over a similar predetermined period of time,
generating respective z-scores of the generated metrics;
summing the z-scores to generate a frame score for the frame;
generating a rolling mean of the frame score over a plurality of frames; and
identifying the current video frame for further processing if the frame score for the current frame exceeds the rolling mean for a predetermined number of preceding frames.

Instances of this summary embodiment implementing the methods and techniques described herein (for example by use of suitable software instruction) are envisaged within the scope of the application as summarised and described elsewhere herein.

### Video Evaluation - Smoothness

As a corollary to the evaluation of video to identify excitement as described elsewhere herein, there are also times where it is useful to identify smoothness (as opposed to merely static images such as system menus, inventories, and the like. Examples may be panning shots from cuts scenes (pre-rendered or in-engine), smooth driving (e.g. when leading a race with no opponents on screen, which may be exciting or satisfying to the viewer even if there is limited visual excitement), or other establishing shots that provide context for subsequent action.

In the same way that the evaluation of video to identify excitement was advantageously content-agnostic, the techniques disclosed herein are also content agnostic and furthermore identify smoothness of movement regardless of the type of movement depicted - whether lateral (panning in any direction), zooming (e.g. flying into the screen), or curved (e.g. rotational, or an arbitrary path such as a river or stream).

The image frames are typically from a video game but may be any other content, such a movie or TV show, or a video monitor for a production line such as a conveyor belt or other continuously operating machinery.

Accordingly, in embodiments of the present description a dense optical flow is computed between successive image frames.

The optical flow vectors may be computed using any known and suitable optical flow means.

In principle a vector can be computed for every corresponding pixel between frame pairs.

In practice, a subset may be used to reduce the computational overhead, and still generate a good approximation of the general flow in the scene. Hence for example one pixel in 4, 9, 16, 25, 36, 49, 64 etc. pixels may be used (corresponding to one pixel in different sized square blocks of pixels, although non-square blocks may also be used). Alternatively or in addition some or all the pixels in subsets of blocks throughout the frame may be used, to detect local divergence in flow within the image.

Where the displayed content is variable (e.g. in a game or movie) then the interaction between a regular sampling pattern and an unconstrained image sequence would still provide a reasonable Monte Carlo approximation of a dense optical flow measurement.

For a fixed view of a scene, such as monitoring machinery, such a regular sampling pattern may also work but in principle may consistently miss a key feature of the scene. In this case either the overall sample density may be adjusted, or the sample offset / positioning may be adjusted to capture the key elements. Similarly, a user interface may be used to identify key areas of the fixed view for comparatively more dense analysis, and the sample density may be adjusted in those key area(s).

Alternatively in either case a random distribution of samples may be used. Again the density of samples may be adjusted to capture relevant area(s) of a fixed scene.

Conversely in such fixed scenes or even in the unconstrained image sequence from a game or TV show, there may be parts of the image that it is preferable to ignore such as a heads up display or game stats such as a health bar, a channel logo, subtitles, or letterbox borders that are not representative of the flow in the actual portrayed scene. Samples from these areas may be discounted (e.g. by not sampling from these areas). The areas themselves may be identified either by metadata associated with the game / content, and/or by rules or heuristics such as the detection of black borders, and/or the establishing of a long period rolling average of the image or a part thereof to identify permanent features such as logos (which will be the only elements to retain high spatial frequency features and/or possibly a different colour distribution to the rest of the image in such an average).

Hence more generally optical flow vectors may be computed / generated for at least a subset of corresponding pixels between frame pairs, where the subset samples at least a predetermined area of interest in each frame pair, and samples to at least a predetermined sample density.

Thus in any event, a representative set of optical flow vectors (whether for all pixels, ½, %, or fewer, in a regular or random distribution of regular or variable density, optionally ignoring one or more areas that are not representative of flow in the image) is established for corresponding pixels of successive frame pairs.

Typically this will be between pairs of shared/overlapping frames, e.g. frame pairs 1-2, 2-3, 3-4, etc., but in principle could be adjacent/non overlapping frames, e.g. frame pairs 1-2, 3-4, 5-6, etc.; this reduces the number of comparisons that need to be made by half, but assuming that for smooth motion, non-overlapping frame pairs are a sufficient measure (i.e. it is unlikely for there to be an isolated frame of action within a series of smooth frames). Herein, 'successive frame pairs' can be taken to refer to either form unless specified.

Next, the delta (difference) between corresponding optical flow vectors (i.e. of successive frame pairs) is calculated. That is to say, a value representative of the change in optical flow vector values between successive frame pairs.

If motion is smooth, these deltas will be small. If motion is variable, these deltas (or at least some of them) will be large.

The differences can be evaluated against various criteria to identify a respective frame pair for further processing.

As a first example, a sum of the deltas for a frame pair characterises the overall smoothness of the video in that frame pair.

Hence a first criterion is to detect smooth overall motion by setting a first threshold that a sum of the deltas for a frame pair should not exceed. Optionally the first threshold may be different depending on whether overlapping or non-overlapping frame pairs are used; deltas for overlapping frames are contiguous whereas deltas for non-overlapping frames are not and could in principle exhibit slightly larger differences for similarly smooth overall motion.

False positives can be avoided by also summing the vectors themselves - low deltas due to little or no movement (for example in a game menu or paused scene) can be identified because the actual vectors will also be close to zero.

Hence a second criterion is to detect smooth and significant motion by setting a first threshold that a sum of the deltas for a frame pair should not exceed, and a second threshold that a sum of the optical flow vectors should exceed. Again the second threshold could be slightly larger for deltas based on non-overlapping frame pairs.

It will be appreciated that the thresholds may be normalised according to the number of samples of each image being used.

Subsequently, frame pairs showing smooth motion, or optionally smooth and significant motion, are identified (e.g. by a tag, updated metadata, flipping a suitable flag in a header or elsewhere, or the like) for further processing.

Optionally here a first step (either prior to identification or as a first step of further processing) is to identify a contiguous sequence of frame pairs of length M that all show smooth (and optionally significant) motion, and hence show a scene (of duration M frames where M is a predetermined number) that exhibits such motion. The step is optional because e.g. for production line monitoring it is likely that smooth motion is the default state.

Such a scene may then be selected or identified for recording, e.g. in a highlights clip.

More generally, further processing may comprise one or more of recording, transmission/sharing, encoding, watermarking, combining, post-processing, ranking or scoring on an absolute and/or relative basis, or labelling for classification or training purposes.

Optionally where a Video Evaluation system implements an evaluation of excitement as well as smoothness, then the scores used to identify both qualities (e.g. as described herein) may be tracked in parallel and optionally a score for one may be used to inform decisions about further processing for the other. For example, a scene with smooth motion within P frames prior to an exciting scene may be specifically selected for a highlight reel (or e.g. security alert, depending on the purpose) in conjunction with the exciting scene, to provide context and contrast (and hence also interest) for the viewer. In this case, generally where scenes are within P frames of each other then the intervening P frames are also included to create a contiguous combined scene.

### Variant Embodiments

Smooth motion may be caused by movements of the viewpoint (e.g. in most game, movie, and TV content) or movements of the scene (e.g. in monitoring applications such as for production lines or traffic flow, but also in game, movie, and TV content). As noted elsewhere herein, the pixels selected for generating optical flow vectors may be any representative distribution within the scene, and this need not be all of the scene, or the sampling density need not be the same in all of the scene (or equivalently but potentially less efficiently, a weighting of samples within the sums need not be the same in all of the scene).

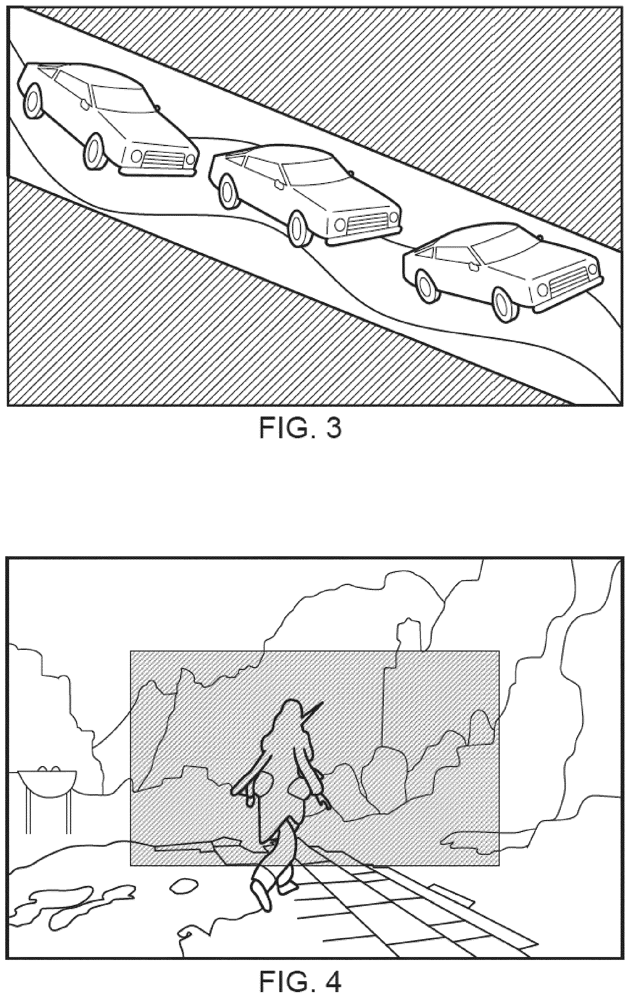

Hence referring now to Figure 3, optionally where the motion of an object or objects within the scene is the important aspect, then the sampled pixels can concentrate (either predominantly or exclusively) within the area of the captured image that the object or objects will or should occupy. In figure 3 the example is traffic flow along a road (but could similarly be a river flow, or the movement of recyclable waste along a conveyor belt). Typically this will therefore apply to cases where the content of the images can be anticipated, as in a monitoring scenario. In this case areas of the image where the object of interest will not (or should not) go are indicated by the hatched triangles and will have fewer or no samples. In this case this may improve the accuracy of the smooth motion estimate of interest by reducing or excluding unwanted variability, for example from roadside trees swaying in the wind. Hence more generally in this case the subset of corresponding pixels between frame pairs conforms (either predominantly or exclusively) to a region to which an object or objects of interest should normally be constrained.

Conversely, where the motion of an object or objects within the scene may be considered unwanted noise when identifying smooth motion of the viewpoint, then the sampled pixels can concentrate (either predominantly or exclusively) outside the area of the captured image that the object or objects will occupy. Hence referring now to Figure 4, for example in a game having a third person character view that tries to keep the player character within the central third of the screen, then the central third of the screen (indicated in the figure by the central hatched region) may be substantially ignored by reducing the number of samples in that area, potentially down to zero. In this case this may improve the accuracy of the smooth motion estimate of the general scene by substantially discounting the animations of the main character, and typically also of any protagonist / antagonist directly in front of them. Hence more generally in this case the subset of corresponding pixels between frame pairs conforms to a region outside which an unwanted object or objects should normally be constrained.

Similarly where only a particular type of movement is of interest (either for an object or for a viewpoint) then flow (and corresponding deltas) for that type or movement may be detected.

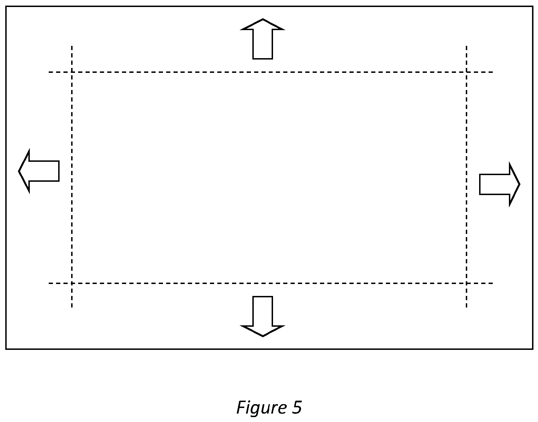

For example a zoom into a scene (e.g. in a driving game) should generate optical flow vectors in the directions shown in the arrows at the respective locations of those arrows. Taking only the vertical or horizontal components of the flow vectors (as appropriate) as indicated by the arrows selectively detects such zoom type movement. Consequently smooth zoom movement can be detected even if there is other motion taking place (such as the activity of other users in other cars). In this way the smoothness of the user (if they are directly or indirectly in control of the viewpoint) can be detected independent of what else is happening on-screen. Hence more generally the calculation of differences between optical flow vectors is based on only a subset of directional components of the optical flow (whether only these are derived when obtaining the vectors, or they are extracted during calculation). The subset can comprise different directional components in different regions of the image as per Figure 5.

Other net motions such as panning horizontally (or in any specific direction) could be filtered for by taking the relevant vector components in the image or in parts therefore (as described above). Similarly specific motion paths could be specified by selecting relevant vector components in corresponding regions of the image.

In addition, the detection of exclusive specific motion can be detected by measuring the optical flow for directions outside those specified (e.g.+/- a predetermined angular tolerance). Optionally these motions may only be considered problematic if they themselves are not smooth as determined using the techniques herein.

Hence smooth and optionally substantive motion (as defined by relevant selections of thresholds) for viewpoints and/or object(s) within views can be detected either for any motion (by default) or specific kinds of motion, optionally detecting if the motion is exclusive to the scene, and/or whether other motion in the scene is also smooth. In response, qualifying frames can be identified and a clip (e.g. of M contiguous frames) may be stored, identified for storage, or otherwise further processed.

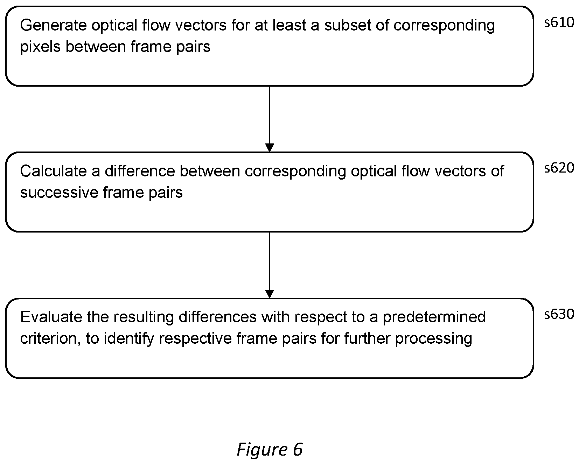

Referring now to Figure 6, in a summary embodiment of the present description, a method of video evaluation for a video comprising successive video frames comprises the following steps.
- In a first step 610, generating optical flow vectors for at least a subset of corresponding pixels between frame pairs, as described elsewhere herein;
- In a second step s620, calculating a difference between corresponding optical flow vectors of successive frame pairs, as described elsewhere herein; and
- In a third step s630, evaluating the resulting differences with respect to a predetermined criterion, to identify respective frame pairs for further processing, as described elsewhere herein.

It will be apparent to a person skilled in the art that variations in the above method corresponding to operation of the various embodiments of the apparatus as described and claimed herein are considered within the scope of the present invention, including but not limited to that:
- the at least subset of pixels samples at least a predetermined area of interest in each frame pair, as described elsewhere herein;
- the at least subset of pixels samples at least at a predetermined sample density (and optionally in a regular or random pattern with a uniform or non-uniform density, further optionally as per a user input), as described elsewhere herein;
- the predetermined criterion comprises that a sum of differences between corresponding optical flow vectors for a successive frame pair do not exceed a first threshold (the first threshold optionally depending on the overlapping or non-overlapping nature of the frame pairs, and/or optionally depending on any selectivity of location within the images of the frame pairs), as described elsewhere herein;
   - In this instance, optionally the predetermined criterion comprises that sum of vectors does exceed a second threshold, as described elsewhere herein;
- the method comprises the step of identifying a contiguous sequence of M identified frame pairs for recording, as described elsewhere herein;
- the method comprises the step of identifying video frames with a threshold level of activity and associate these with identified frame pairs for recording, if within a predetermined distance of each other within the frame sequence, as described elsewhere herein;
   - In this instance, optionally the activity is detected according to a method of video evaluation, comprising the steps of:
      for a current video frame, generating two or more metrics from the list consisting of:
      i. an interframe greyscale delta sum of absolute differences between the current and immediately preceding frame;
      ii. a first interframe colour delta sum of absolute differences for at least a first colour channel between the current and immediately preceding frame;
      iii. a second interframe colour delta sum of absolute differences for at least a second colour channel different to the first colour channel between the current and immediately preceding frame;
      iv. for a first colour channel of the current video frame, a delta between mean and current measurements of a property of the first colour channel, the mean being derived over a predetermined period of time; and
      v. for a second colour channel of the current video frame, a delta between mean and current measurements of a property of the second colour channel, the mean being derived over a similar predetermined period of time,

      generating respective z-scores of the generated metrics;
      summing the z-scores to generate a frame score for the frame;
      generating a rolling mean of the frame score over a plurality of frames; and identifying the current video frame for further processing if the frame score for the current frame exceeds the rolling mean for a predetermined number of preceding frames,
      as described elsewhere herein;
- the subset of corresponding pixels between frame pairs conforms to a region to which an object or objects of interest should normally be constrained, as described elsewhere herein; or alternatively,
- the subset of corresponding pixels between frame pairs conforms to a region outside which an unwanted object or objects should normally be constrained, as described elsewhere herein;
- the calculation step is based on only a subset of directional components of the generated optical flow vectors, as described elsewhere herein; and
   - in this instance, the subset of directional components can comprise different directional components in different regions of the frame, as described elsewhere herein.

It will be appreciated that the above methods may be carried out on hardware suitably adapted as applicable by software instruction or by the inclusion or substitution of dedicated hardware.

Thus the required adaptation may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description, an entertainment system comprises a video evaluation processor (for example CPU 20, and / GPU 30) adapted (for example by suitable software instruction) to perform in operation, for a video comprising successive video frames, the steps of:
- generating optical flow vectors for at least a subset of corresponding pixels between frame pairs, as described elsewhere herein;
- calculating a difference between corresponding optical flow vectors of successive frame pairs, as described elsewhere herein; and
- evaluating the resulting differences with respect to a predetermined criterion, to identify respective frame pairs for further processing, as described elsewhere herein.

Instances of this summary embodiment implementing the methods and techniques described herein (for example by use of suitable software instruction) are envisaged within the scope of the application, including but not limited to that:
- the at least subset of pixels samples at least a predetermined area of interest in each frame pair, as described elsewhere herein; and
- the at least subset of pixels samples at least at a predetermined sample density, as described elsewhere herein.

### Video Evaluation - Scene Cuts

In addition to exciting events and smooth events within a video, another significant event is a scene change, i.e. a cut between views (and potentially between entire locations and contents).

Scene cuts can be regular occurrences within TV and Movies, but are less common in video games, where they typically signal either the start of a so-called 'cut scene', or a different display mode (for example when interacting with a non-player character), or changing a game mode (for example switching to an inventory or other menu, or to a system menu).

It is desirable to identify scene cuts in a computationally cheap manner.

If the excitement scheme described elsewhere herein is already being used, then optionally it can also be used to detect scene changes at little extra computational cost. This would be based on one or more of measurements i., ii., or iii., and comprise detecting a single interframe spike in the respective delta sum in one or more of these (any typically in all of those being measured, simultaneously), surrounded by interframe delta sum values that are lower. Typically, exciting events (even explosions) are not over in a single frame, whereas cuts are in effect instantaneous and so would result in an isolated value spike.

However, there is still scope for errors with such an approach (for example camera flashes, lightning, and similar global changes in lighting or colour can be instantaneous and so may possibly be detected as false positives).

Consequently, alternatively or in addition to the above scheme, in embodiments of the present description a method of cut detection comprises generating a perceptual hash of the current image frame and then comparing it to a corresponding hash of at least the previous frame.

A perceptual hash is a method of generating a consistent and small representation an image. The resulting hash (unlike a cryptographic hash) is similar for similar images.

A simple example is as follows:
i. Take the original image and reduce it to a predetermined size; for example 8x8 pixels (though this is a non-limiting example, and a reduced image may for example preserve a known aspect ratio - for example as a 16x9 pixel image). This reduction removes high frequency image features and preserves only the low frequency structure.
ii. This image can the optionally be made greyscale. Using the 8x8 pixel example, this reduces the representation of the image to just 64 values (a colour version would be 3x64).
iii. In either case, compute the mean of the greyscale or of each colour channel.
iv. Then generate a bit sequence by setting a bit for each greyscale value according to whether it is above or below the mean. In effect this reduces the image to a 64 bit representation of whether parts of the image are darker than average or lighter than average. The colour version will have 3x64 bits.
v. Finally, optionally construct the hash by turning the 64 bits into a 64-bit integer, using any predetermined and consistent order of the bits. As a non-limiting example from an 8x8 image, the bits could be read left to right, top to bottom, generating an integer using the big-endian convention.

So in summary, the hash process comprises - removing high frequencies / retaining low frequencies, typically by reducing image size. Optionally but preferably reducing colour for example to a greyscale, and then encoding variations in the greyscale image (for example as a binary threshold based on a global mean). The resulting encoding can then be stored as-is as a binary string, or as a hash integer.

A similar perceptual hash aims to achieve the same goal but using the frequency domain, as follows:
i. Again, the original image is reduced in size, but not to the same extent as the first example; for example to a 32x32 image (i.e. roughly 4 time bigger than in the first example). This removes some high frequency elements but not to the same extent as the first example.
ii. Optionally reduce the colour to a greyscale again.
iii. Compute a discrete cosine transform (DCT) of the image (e.g. to generate a 32x32 DCT representing the image in frequencies). Note that reducing the image to 32x32 picels is primarily done to simplify the DCT calculation; a larger image (e.g. 64x64, or 128x128, or indeed at the native resolution) could similarly be used but would impose an unnecessary computational burden.
iv. Retain only the top left 8x8 values; these represent the lowest frequencies in the picture. Hence at this point the frequencies retained by both this technique and the first example are roughly the same, but in this technique the frequencies are more accurately represented.
v. Again compute the average value of these 8x8 DCT values, this time excluding the first (DC) term, which can be very different to the others.
vi. Again generate a bit sequence by setting a bit for each of the 8x8 DCT values according to whether it is above or below the mean. Again this therefore results in a 64 bit representation that this time indicates the relative presence or absence of low frequency image components.
vii. Finally, again optionally construct the hash by turning the 64 bits into a 64-bit integer using any predetermined and consistent order of the bits. In this case optionally the bits could be read emanating from the corner (DC) position, e.g. (1,1)(2,1)(2,2)(1,2)(3,1)(3,2)(3,3)(2,3)(1,3) and so on using the big-endian convention; this would mean that the lowest frequency elements within the image have the largest impact on the value of the resulting hash number.

So the two approaches are basically the same, but one computes the hash in the spatial domain (using the reduced picture) and one computes the hash in the frequency domain (using the reduced DCT).

A similar approach in the frequency domain may substitute a wavelet transform for the DCT.

As noted above, 8x8 and 32x32 images are non-limiting examples only, but are sufficient to characterise the images in order to detect the relative similarity of successive images.

For successive images, a respective hash is generated using one of the spatial or frequency based approaches above (that is to say, one of these approaches is used consistently). Each hash is then compared at least with the hash of the immediately preceding hash.

This can be done simply by deducting the value of one hash from the other - for example for identical images, hash_t2 - hash_t1 = 0.

Typically for successive images in a video, the hashes will differ. Hence in an example, example hash_t2 - hash_t1 = 20, meaning the difference in the 64-bit values of the hashes is 20.

However, because the values of the bits have different weights within a 64-bit image, this weights differences in some bits more than others. The bit ordering scheme disclosed elsewhere herein for the frequency domain hash is an example where the bits related to the lowest frequency features have the highest weight (i.e. the lowest frequency bits become the highest significance bits) so that the change in hash values roughly correlates with structural changes in the image.

In principle, a naive the threshold for when successive images correspond to a cut between scenes is when 50% of the bits change (since for uncorrelated images one might assume that there is an even chance of each feature being either above or below the mean threshold and hence a 50/50 change of this being the same between two images).

Hence for a 64 bit sequence, the threshold could be a hamming distance of 32 (i.e. 32 bits that are different values between the hashes of the two images).

Using the hamming distance means that converting the bits into an actual hash number is not necessary (although it may be a convenient way to store the bits), so in effect the 64 bit sequence may not need to be treats as, and operated upon, as a number.

It is possible that for some forms of content, there are certain features that tend to persist between scenes, such as long horizontal features e.g. of ground/sky or of floor/wall. Consequently optionally a weighted hamming distance may be used that alters the contribution of certain bits in either the spatial or frequency based hashes. These bits can be determined empirically. However, such a weighting makes the assessment of the hashes more complex, and for cuts between scenes typically an unweighted comparison may be sufficient. Nevertheless, a threshold hamming distance other than 32 / 50% may be empirically determined in practice, for example based upon the type of content, or the genre or even specific title of game.

In any event, the perceptual hash is a fast, robust, and low-overhead means to detect a significant difference between successive images.

A noted previously, a cut scene can be detected based on comparing a current hash to an immediately preceding hash, but this may result in a similar problem to that mentioned previously if using measurements i., ii. or iii, namely that near instant events such as a camera flash or lightning may be misinterpreted as a lightning strike.

Accordingly, for any of the cut detection techniques described herein, a comparison over a sequence of images may optionally be used, where the sequence may comprise a number suitable to distinguish over in-scene transitory events such as camera flashes, or optionally explosions.

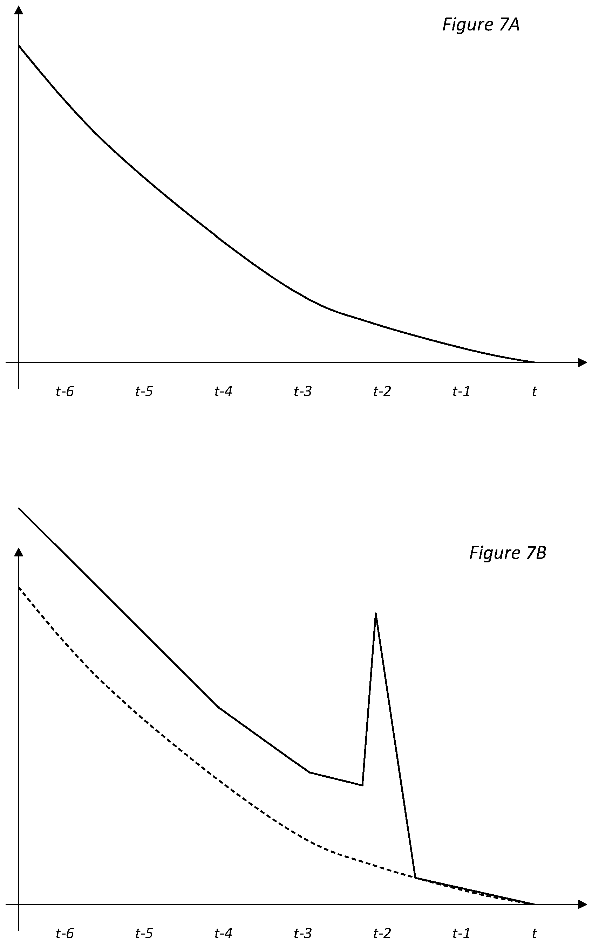

Referring now to figures 7A-C, in each case the x-axis refers to time (for example in terms of image frames counting back in time from current frame 't', and the y-axis refers to the hamming difference between adjacent image hashes (or equivalently interframe delta sums of one or more of measurements i. - iii.).

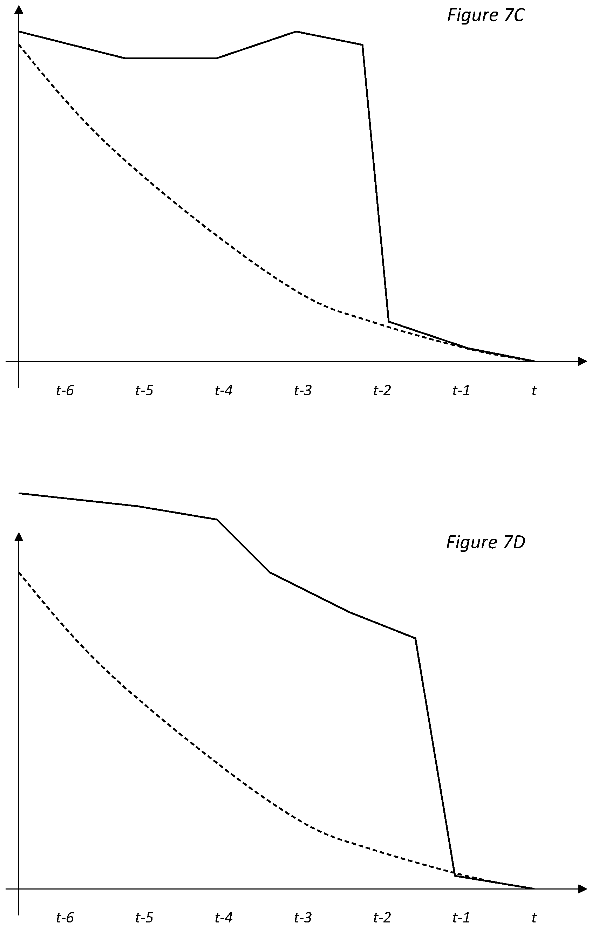

Figure 7A shows the difference between the hash for image frame t and the hash for preceding image frames within a single scene. One can see a gradual increase in difference as the scene evolves. Meanwhile Figure 7B shows an in scene event that occurred at frame t-2 (e.g. an explosion). In this case there is a notable difference with the hash of that frame, but differences with hashes of earlier frames again show a gradual increase in difference (here with a notional offset reflecting persistent differences in the visible scene caused by the explosion in frame t-2). Finally, Figure 7C shows a scene cut occurring at frame t-2. In effect, frame t-2 is uncorrelated with frame t and so the hamming distance jumps immediately to a value near 50%, and, since the earlier images in that other scene are similarly uncorrelated, the distance for those images (with some noise) are also near a hamming distance of 50% (or whatever the empirical threshold is determined to be). Consequently frame t-2 can be identified as the boundary of a scene cut.

Hence a scene change can be identified by detecting a step function in the hamming distance between the perceptual hashes of the current and N earlier image frames, where N is 2 or more (i.e. to capture a scene change at time t-1). Longer values of N given greater certainty of a scene change, up to a value of N where the scene change was long enough ago that changes in the current scene have accumulated to the point that hashes from the start of the current scene and now similarly approach a hamming distance of 50% - hence for example in the entirely exemplary scenario shown in Figures 7A-C, once the current scene is 6 frames old, it cannot be distinguished from a cut (compare in Figure 7C for example the hamming distance represented by the dotted line corresponding to the old scene from Figure 7A with the values from a scene prior to the cut represented by the solid line).

This upper bound for N may be determined empirically, or alternatively a value of N that encompasses the transitory events of the content as exemplified by Figure 7B may be used instead. Hence for example if a typical explosion is determined to last 10 frames +/- 2 frames, then optionally a value of N=15 may be used.

Finally, it will be noted that when the 'explosion' frame in Figure 7B is the current frame, then all the preceding frames look quite different, and this could be mistaken for a scene cut; this is illustrated in Figure 7D (here the explosion in frame t makes all the earlier frames in the scene look different, although there is still some correlation) . Hence again it may be preferable for the value of N to encompass the transitory events of the content as exemplified by Figure 7B, so that the current frame and preferably two or more older frames are on either side of the transitory event.

Alternatively or in addition, optionally the scene boundary represented by the step function should only be identified at a frame N or earlier (e.g. at least t-2 or earlier) as this excludes an apparent boundary caused by a current frame being a transitory event, and requires at least the preceding frames t-1 to also differ from t-2 (or more generally for the frame t-(N-1) to differ from frame t-N).

### Variant Embodiments

Alternatively or in addition to the whole image frame, the image frame may be split into subsections, such as for example a left half and a right half. This can then be used to detect a common cut between points of view in a conversation; the overall background may be similar between viewpoints, but the person framed in shot will switch from left to right; for the perspective of a half image, this will resemble a scene cut.

Referring back to Figure 4, similarly the central third of the image may be ignored (for example replaced with an mid-value grey in the reduced 8x8 or 32x32 image) so that significant changes (such as explosions and jump scares) are typically discounted. Meanwhile changes to the scene as a whole, such as a cut from an exterior to an interior, or from the game environment to a menu, can still be detected.

It will be appreciated that one or more of the interframe delta sums of measurements i., ii., and iii. mentioned elsewhere herein, or the differences in perceptual hashes (whether spatially or frequency based) as mentioned elsewhere herein may be used, optionally over N >=2 preceding frames, and optionally for one or more subsets or subregions of the images, to detect a cut between scenes.

This cut can be used for example to limit the number of frames that are used preceding (or following) an exciting clip to within the same scene. Similarly where evaluation a smooth scene may ignore a single divergent frame value, the cut detection may detect whether that was in fact due to a scene change and re-set the estimation of smoothness. More generally it may be used to establish the start of a sequence of frames whose metrics are then used for detecting either excitement and/or smoothness.

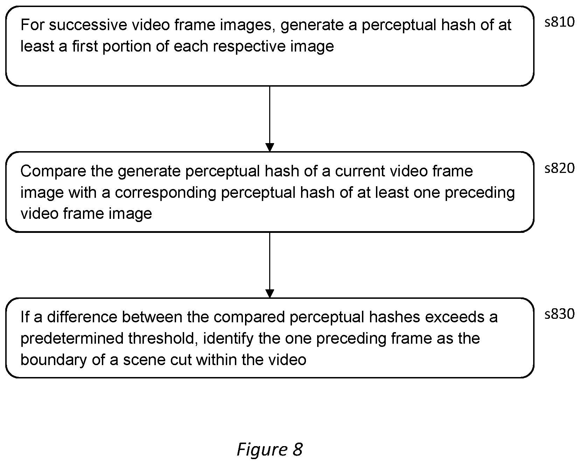

Referring now to Figure 8, in a summary embodiment of the present description, a method of video evaluation for a video comprising successive video frames comprises the following steps:
- In a first step s810, for each video frame image, generate a perceptual hash of at least a first portion of a respective image, as described elsewhere herein;
- In a second step s820, compare the generated perceptual hash of a current video frame image with a corresponding perceptual hash of at least one preceding video frame image (e.g. the immediately preceding video frame), as described elsewhere herein; and
- In a third step s830, if a difference between the compared perceptual hashes exceeds a predetermined threshold, identify the one preceding video frame as the boundary of a scene cut within the video, as described elsewhere herein.

It will be appreciated that the different video evaluation methods and systems disclosed herein can be used in any suitable combination, including those described herein. Hence for example where a clip has been identified as exciting, the clip may be extended to the beginning and/or the end of the scene as identified by the scene cut detector, for example based on how long the intervening gap between the exciting clip and the scene boundar(ies) are.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of video evaluation for a video comprising successive video frames, the method comprising the steps of:
generating optical flow vectors for at least a subset of corresponding pixels between frame pairs;
calculating a difference between corresponding optical flow vectors of successive frame pairs; and
evaluating the resulting differences with respect to a predetermined criterion, to identify respective frame pairs for further processing.

2. The method of claim 1, wherein:
the at least subset of pixels samples at least a predetermined area of interest in each frame pair.

3. The method of claim 1 or claim 2, wherein:
the at least subset of pixels samples at least at a predetermined sample density.

4. The method of any preceding claim, wherein:
the predetermined criterion comprises that a sum of differences between corresponding optical flow vectors for a successive frame pair do not exceed a first threshold.

5. The method of claim 4, wherein:
the predetermined criterion comprises that sum of vectors does exceed a second threshold.

6. The method of any preceding claim, comprising the step of:
identifying a contiguous sequence of M identified frame pairs for recording.

7. The method of any preceding claim, comprising the step of:
identifying video frames with a threshold level of activity and associate these with identified frame pairs for recording, if within a predetermined distance of each other within the frame sequence.

8. The method of any preceding claim, in which:
the subset of corresponding pixels between frame pairs conforms to a region to which an object or objects of interest should normally be constrained.

9. The method of any one of claims 1-7, in which:
the subset of corresponding pixels between frame pairs conforms to a region outside which an unwanted object or objects should normally be constrained.

10. The method of any preceding claim, in which:
the calculation step is based on only a subset of directional components of the generated optical flow vectors.

11. The method of claim 10, in which
the subset of directional components can comprise different directional components in different regions of the frame.

12. A computer program comprising computer executable instructions adapted to cause a computer system to perform the method of any one of the preceding claims.

13. An entertainment system, comprising:
a video evaluation processor adapted to perform in operation, for a video comprising successive video frames, the steps of:
generating optical flow vectors for at least a subset of corresponding pixels between frame pairs;
calculating a difference between corresponding optical flow vectors of successive frame pairs; and
evaluating the resulting differences with respect to a predetermined criterion, to identify respective frame pairs for further processing.

14. The entertainment system of claim 13, in which
the at least subset of pixels samples at least a predetermined area of interest in each frame pair.

15. The entertainment system of claim 13 or claim 14, in which
the at least subset of pixels samples at least at a predetermined sample density.
